# EUROPÄISCHE PATENTSCHRIFT

(11) **EP 1 047 910 B1**
(45) Veröffentlichungstag und Bekanntmachung des Hinweises auf die Patenterteilung: **28.01.2004**
(21) Anmeldenummer: 99972300.0
(22) Anmeldetag: 17.11.1999
(51) Int. Cl.: F24F 6/14

(54) **EINRICHTUNG ZUR AUFBEREITUNG VON LUFT**
DEVICE FOR CONDITIONING AIR
DISPOSITIF DE PREPARATION D'AIR

(30) Priorität: 18.11.1998 AT 191898
(43) Veröffentlichungstag der Anmeldung: 02.11.2000
(73) Patentinhaber: Kröll, Hansjorg, 6134 Vomp (AT)
(72) Erfinder: Kröll, Hansjorg, 6134 Vomp (AT)
(74) Vertreter: Torggler, Paul Norbert, Dr.
(86) Internationale Anmeldenummer: PCT/AT1999/000277
(87) Internationale Veröffentlichungsnummer: WO 2000/029790

(56) Entgegenhaltungen:
- EP-A- 0 251 196
- DE-A- 1 679 494
- DE-A- 4 024 276
- FR-A- 2 574 908
- NL-A- 8 900 352
- US-A- 1 718 815
- US-A- 5 193 354
- US-A- 5 497 628
- US-A- 5 519 900

## Beschreibung

Die Erfindung betrifft eine Einrichtung zur Aufbereitung von Luft mit in einem Behandlungsraum angeordneten Düsen zum Zerstäuben von Wasser in die den Behandlungsraum durchströmende Luft und mit einem Flüssigkeitskreislauf zum Zurückführen von zumindest einem Teil des von der Luft nicht aufgenommenen Wassers zu den Düsen. Eine derartige Einrichtung ist nach der DE-A-1 679 494 bekannt.

Zur Aufbereitung von Luft in klimatisierten Bereichen, beispielsweise Sprühkabinen oder Gebäuden, ist es nötig, die Luft auf eine gewünschte Temperatur und einen gewünschten Feuchtegrad zu bringen. Bisher hat man dazu schwere und platzraubende gesonderte Heiz- bzw. Kühlregister und Befeuchtungseinrichtungen verwendet, die hintereinander geschaltet sind. Insbesondere war es bisher üblich, die Luft auf ca. 50°C zu erwärmen und anschließend zu befeuchten.

Aufgabe der Erfindung ist es, eine Einrichtung zur Aufbereitung von Luft der eingangs genannten Gattung zu schaffen, die sich durch eine kompakte Ausbildung auszeichnet.

Erfindungsgemäß wird dies dadurch erreicht, daß der Flüssigkeitskreislauf ein Rohrleitungssystem aufweist, dass eine Heizeinrichtung zum Aufheizen des Wassers und/oder eine Kühleinrichtung zum Abkühlen des Wassers im Rohrleitungssystem des Flüssigkeitskreislaufs angeordnet ist, und daß am Ausgang des Behandlungsraumes ein Temperatur- und Feuchtefühler angeordnet ist.

Bei bisherigen Einrichtungen zur Aufbereitung von Luft hat man das Beheizen bzw. Kühlen (je nach Bedarf) in gesonderten Heiz- und Kühtregistern vorgenommen und die Befeuchtung mittels ungeheiztem bzw. ungekühltem Wasser vorgenommen. Die Grundidee der Erfindung besteht nun darin, zum Heizen bzw. Kühlen der Luft einerseits und zur Einstellung des Feuchtegrades andererseits, das über die Düsen zerstäubte Wasser zu nehmen, wobei eben das Erwärmen bzw. Kühlen der Luft dadurch möglich wird, daß man das versprühte Wasser aufheizt bzw. kühlt. Es ist also möglich, die durchströmendende Luft ausschließlich durch das aus den Düsen ausströmende Wasser ohne weitere Luftheizeinrichtung bzw. Luftkühleinrichtung zu erwärmen und zu kühlen. Lediglich für bestimmte Anwendungen im Kühlbetrieb kann ein kleines Nachheizregister von Vorteil sein, um die korrekte relative Lufteinstellung zu erzielen. Die schweren und platzraubenden, großen Heiz- und Kühlregister der bisherigen Anlagen können aber unterbleiben.

Die Kühlung bzw. Aufheizung des im Kreislauf geführten Wassers kann auf die verschiedenste Art und Weise erfolgen. Beispielsweise ist es möglich, in einem Auffangbecken am Boden des Behandlungsraumes einen Wärmetauscher anzuordnen. Dieser Wärmetauscher kann aber auch im Rohrleitungssystem zu dem den Düsen tragenden Düsenstock untergebracht sein. Prinzipiell ist es möglich, für das Heizen und Kühlen gesonderte Wärmetauscher vorzusehen. Es ist aber auch möglich, nur einen einzigen Wärmetauscher anzuordnen, über den man je nach Bedarf die Kühlung bzw. Heizung vornimmt.

Da die äußeren Umweltbedingungen im allgemeinen stark variieren, ist es günstig, wenn die erfindungsgemäße Einrichtung das im Flüssigkeitskreislauf geführte Wasser je nach Bedarf kühlen und aufheizen kann. Bei konstanteren äußeren Bedingungen ist aber auch eine Einrichtung denkbar, die nur in der Lage ist zu kühlen bzw. nur in der Lage ist, zu heizen. Je nach unterschiedlichen klimatischen Bedingungen kann man die Heiz- bzw. Kühlleistung anpassen und auch die Wärmetauscher, Rohrleitungen und Düsen entsprechend dimensionieren.

Weitere Vorteile und Einzelheiten der Erfindung werden anhand der nachfolgenden Figurenbeschreibung näher erläutert.

Die Fig. 1 zeigt in einer schematischen Seitenansicht ein Ausführungsbeispiel einer erfindungsgemäßen Einrichtung mit 25 Filtern und einer maximalen Luftmenge von ca. 100 000 m³/h, wobei die Anlagenkomponenten aus Gründen der Übersichtlichkeit in einem schematischen Schaltplan außerhalb der Einrichtung dargestellt sind.

Die Fig. 2 zeigt eine vordere Schnittansicht in Luftströmungsrichtung gesehen.

Die Fig. 3 zeigt eine Schnittansicht von der Seite.

Die Fig. 4 zeigt einen Grundriß eines erfindungsgemäßen Ausführungsbeispiels.

Die Fig. 5 zeigt ein Mollier-h-x-Diagramm nach dem Stand der Technik.

Die Fig. 6 zeigt ein Mollier-h-x-Diagramme gemäß einem Beispiel der Erfindung.

Bei den gezeigten Ausführungsbeispielen strömt die Luft gemäß den Pfeilen 25 in die Einrichtung ein. Die Luftströmung wird von einem Ventilator 16 erzeugt, der extern angeordnet aber auch Teil der Anlage sein kann. Jedenfalls ist es günstig, den Ventilator von der Regeleinrichtung der Anlage aus zu steuern. Die auf die vorgegebene Temperatur und Feuchte gebrachte Luft strömt dann in Richtung der Pfeile 26 aus.

Die Einrichtung weist einen von Wänden umgebenen Behandlungsraum 27 auf, in dem zwei hintereinander geschaffene aus Rohrleitung bestehende Düsenstöcke 2 angeordnet sind. Die Düsenstöcke tragen mehrere Düsen 28, aus denen Wasser zerstäubt austritt, und zwar in einer Richtung, die der Luftströmrichtung 25 bzw. 26 entgegengesetzt ist.

Diese Luft tritt über Filter (im vorliegenden Fall sind es 25 Filter 1) in den Raum ein, wobei die Filter auch eine Vergleichmäßigung der Luftströmung vornehmen und diese nicht nur reinigen.

Austrittsseitig befindet sich noch ein Tropfenabscheider 3, um von der Luftströmung mitgerissene Wassertröpfchen abzuscheiden.

Erfindungsgemäß wird über das aus den Düsen 28 versprühte Wasser in einem Prozeß die Einstellung der Temperatur und des Feuchtegrades erzielt, wobei zu diesem Zweck das zumindest teilweise im Kreislauf geführte und über die Düsen 28 zerstäubte Wasser mittels einer Kühleinrichtung bzw. einer Heizeinrichtung aufgeheizt wird.

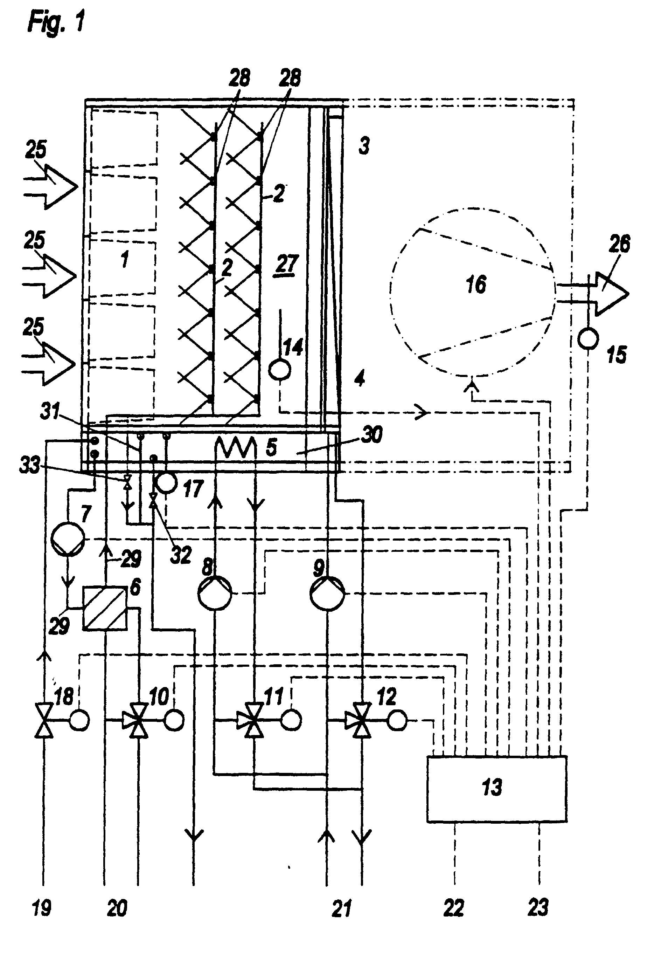

Bei dem in Fig. 1 dargestellten Ausführungsbeispiel ist zum Kühlen des Wassers ein Wärmetauscher 6 vorgesehen, der im Rohrleitungssystem 29 des Flüssigkeitskreislaufes angeordnet ist. In diesem Rohrleitungssystem befindet sich noch eine von der Regeleinrichtung 13 geregelte Pumpe 7. Zum Flüssigkeitskreislauf gehört noch eine Auffangvorrichtung in Form einer Auffangwanne 30 am Boden des Behandlungsraumes 27, in welcher sich das von der Luft nicht aufgenommene Wasser sammelt. Das genannte Rohrleitungssystem 29 entnimmt aus dieser Wanne 30 das Wasser und führt es über die Pumpe 7 und den Wärmetauscher 6 den Düsenstöcken 2 bzw. den Düsen 28 zu.

Der zum Kühlen vorgesehene Wärmetauscher 6 wird primärseitig über die Anschlüsse 20 mit Kaltwasser versorgt, wobei ein Regelventil 10 die Temperaturregelung vornimmt.

Zum Heizen ist beim dargestellten Ausführungsbeispiel direkt in der Auffangwanne 30 ein Wärmetauscher 5 vorgesehen, der über eine geregelte Pumpe 8 und ein Regelventil 11 mit dem Heißwasseranschluß 21 in Verbindung steht.

Wenn kein externer Heizwasseranschluß zur Verfügung steht, kann das Aufheizen natürlich auch in der Anlage selbst, beispielsweise über eine elektrische Widerstandsheizung oder eine Öl- bzw. Gasheizung erfolgen. Auch ist es - wie bereits erwähnt - prinzipiell möglich, zum Heizen und Kühlen ein und denselben Wärmetauscher zu verwenden, welcher einfach primärseitig mit dem entsprechenden Kühl- bzw. Heizmedium betrieben wird.

In der Auffangwanne 30 ist ein Niveausensor 17 vorgesehen, der über die Regeleinrichtung 13 die Wasserzufuhr aus dem Frischwasseranschluß 19 über das Frischwasserventil 18 regelt. Ein Sicherheitsüberlauf in der Wanne ist mit 31 bezeichnet. Über das Ventil 32 kann man eine Entleerung der Wanne vornehmen. Um ein Verschlammen der Anlage zu verhindern, kann über ein Abschlammventil 33 regelmäßig eine gewisse Wassermenge aus dem Flüssigkeitskreislauf abgezweigt werden, die dann automatisch durch die Regelung zu einem Ersatzfrischwasser führt.

Zur Regelung ist eine elektronische Regeleinrichtung 13 vorgesehen, die in Abhängigkeit von den Signalen einem kombinierten Temperatur- und Feuchtesensor 15 die Kühl- und Heizleistung sowie die pro Zeiteinheit geförderte Wassermenge regelt. Der Sensor 15 kann auch zwei gesonderte Sensoren, einen für die Temperatur, einen für die Feuchte, umfassen. Der Temperatursensor 14 ist nicht unbedingt nötig, er liefert hauptsächlich interessante Prozeßdaten in der Testphase. Die Regeleinrichtung 13 weist einen Stromanschluß 22 und einen Anschluß 23 auf, der mit einem zentralen Leitstand verbunden sein kann. Es ist aber auch möglich, die Regelung 13 völlig autonom auszuführen.

Die Regelung kann dabei insbesondere zur Durchführung des erfindungsgemäßen Verfahrens ausgelegt sein, bei dem zum Aufbereiten der Luft über Düsen zerstäubtes, aufgeheiztes Wasser zugeführt wird, und zwar derart, daß die Temperatur der Luft in einem Prozeß kontinuierlich auf den austrittsseitigen Temperatur-Endwert gehoben wird, wobei die relative Feuchte der Luft in diesem Prozeß auf einen vom Taupunkt (100% relative Feuchte) verschiedenen Wert geführt wird.

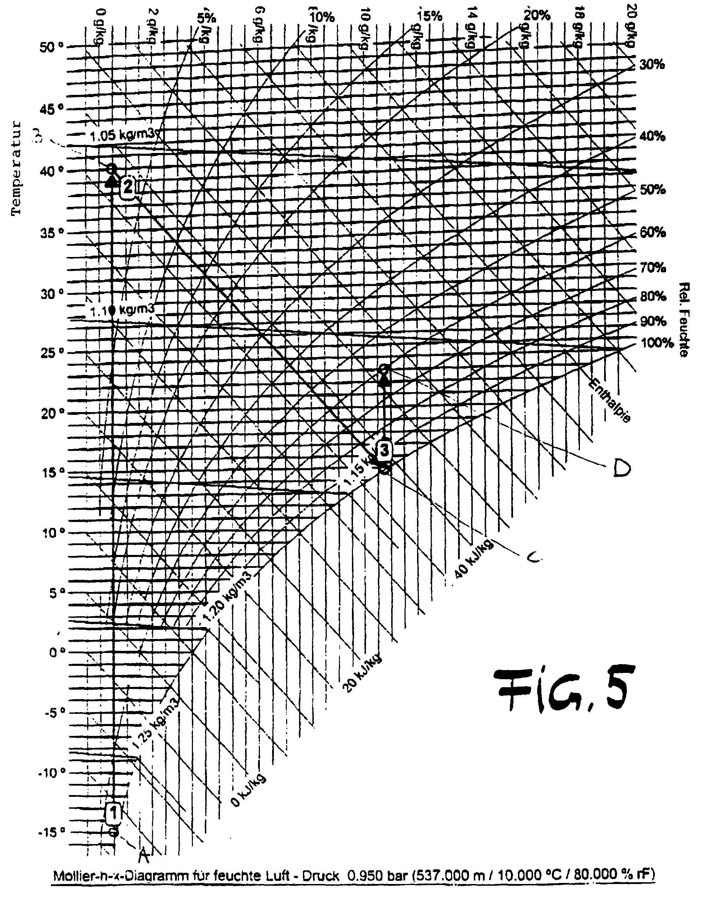

Bei dem in Fig. 5 dargestellten Mollier-h-x-Diagramm für feuchte Luft wird die Luft nach dem Stand der Technik aufbereitet. Ausgehend vom Anfangszustand A wird die Luft zunächst ohne Feuchtzufuhr einfach bis zum Punkt B erwärmt. Danach erfolgt eine Zufuhr der Feuchte, wobei die Temperatur sinkt, und zwar bis der Taupunkt C (relative Luftfeuchtigkeit = 100%) erreicht ist. Von dort aus erfolgt dann in einem dritten Prozeß die Erwärmung auf den gewünschten Endpunkt D mit einer Temperatur von beispielsweise 23°C und einer relativen Luftfeuchte von 60%.

Dieses Verfahren umfaßt also insgesamt also drei Prozesse, wobei vor allem die Aufheizung der Luft auf eine hohe Temperatur von beispielsweise 40° ungünstig ist.

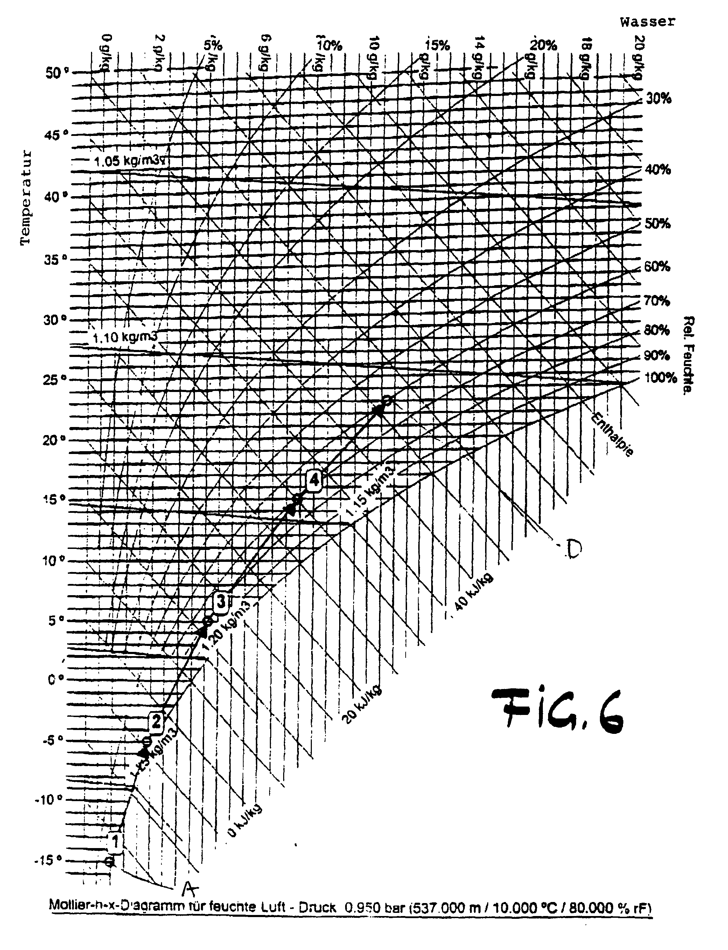

Erfindungsgemäß ist nun vorgesehen, durch Einsprühen von erwärmtem Wasser ausgehend vom Ausgangspunkt A den Endpunkt D durch eine im wesentlichen kontinuierliche Prozeßführung hinsichtlich der Temperatur- und Feuchteänderung zu erreichen. Besonders bevorzugt ist eine Ausführungsform bei der während der Prozeßführung die relative Luftfeuchtigkeit sogar abnimmt, wie dies in Fig. 6 gezeigt ist.

Um beim Kühlen bei bestimmten äußeren klimatischen Bedingungen die korrekte relative Feuchtigkeit immer einstellen zu können, ist ein kleines Nachheizregister 4 vorgesehen, welches als Wärmetauscher ausgebildet ist. Dieser Wärmetauscher wird vom Heißwasseranschluß 21 aus über die Pumpe 9 versorgt. Die Regeldung erfolgt wieder über die zentrale elektronische Regeleinrichtung 13. Beim Heizen wird dieses Nachheizregister 4 vorzugsweise nicht verwendet.

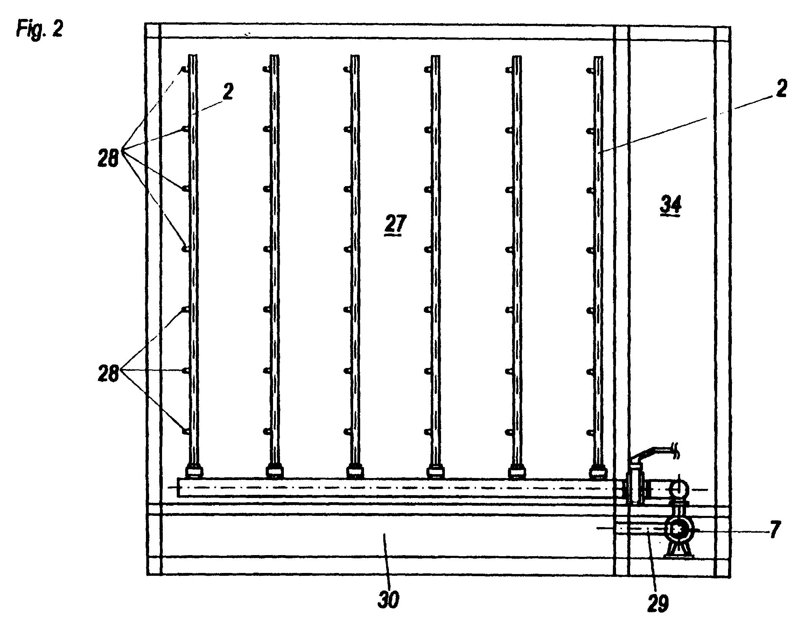

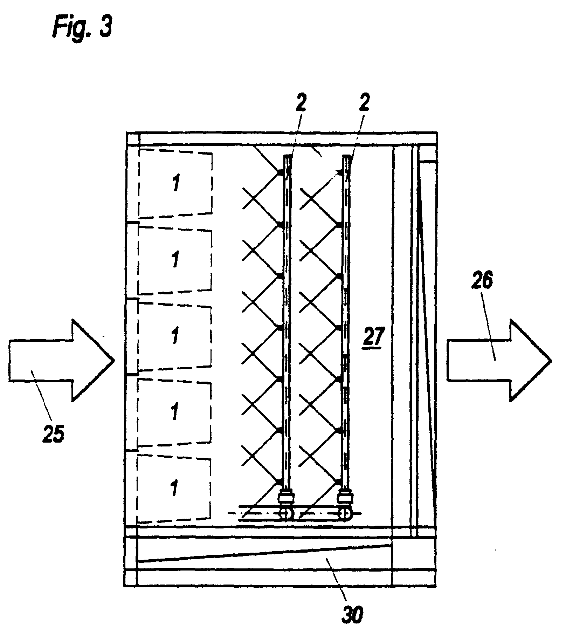

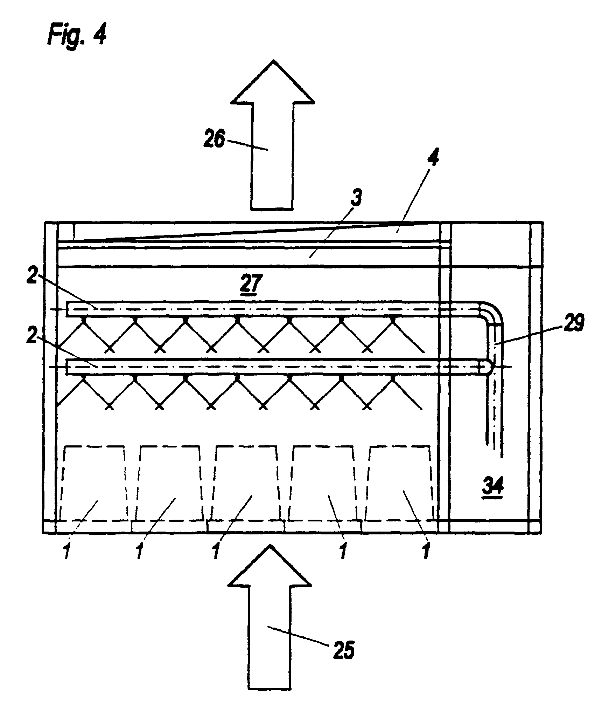

Die Fig. 2, 3 und 4 zeigen die erfindungsgemäße Einrichtung anhand eines Ausführungsbeispiels in einer vorderen Schnittansicht, einer seitlichen Ansicht und im Grundriß. Dabei sind die in Fig. 1 schematisch heraus gezeichneten Anlagen Komponenten und Verrohrungen sowie die Regeleinrichtung samt elektrischen Leitungen der Übersichtlichkeit halber nicht dargestellt. Alle diese Komponenten bzw. zumindest ein Großteil davon befindet sich in einem seitlichen Anlagenschrank 34, der an den Behandlungsraum 27 angebaut ist. In diesem Vorbau ist somit die ganze Anlagentechnik gut zugänglich, womit eine erhöhte Wartungsfreundlichkeit erzielt wird. Der Schaltschrank bzw. -vorbau erstreckt sich über die gesamte Höhe der Anlage. Die Komponenten sind hinter einer Wand untergebracht, die über eine nicht dargestellte Tür oder demontierbare Wandelemente zugänglich sind.

Erfindungswesentlich ist, daß die wichtigsten Behandlungen zur Temperatur- und Feuchteeinstellung kompakt in einem einzigen Prozeß durch Zerstäuben von aufgeheizten bzw. gekühltem Wasser durchgeführt werden, wobei allenfalls beim Kühlen ein kleines Nachheizregister zum Einsatz kommt. Dadurch ist es möglich, den Platzbedarf der gesamten Anlage gegenüber herkömmlichen Anlagen wesentlich zu reduzieren. Es ist auch möglich, alle externen Anschlüsse zentral an einem Punkt vorzusehen, wo beispielsweise Kühlmedium, Heizmedium, Wasserablauf und Stromversorgung vorgesehen sind. Grundsätzlich ist es aber auch möglich, die Einheit zumindest teilweise autonom auszuführen, d. h. das Kühlen oder Heizen in der Anlage selbst vorzunehmen. Durch die Größenreduktion ist es beispielsweise möglich, die gesamte Einrichtung bis zu einer Luftmengenkapazität von ca. 200 000 m³/h als komplett vormontierte Einheit mit Regelgruppen und Steuerung per LKW zu liefern, wodurch eine große Ersparnis eintritt. Durch die kompakten Abmessungen ergibt sich auch eine wesentliche Kostenreduktion für den Endkunden.

## Patentansprüche

1. Einrichtung zur Aufbereitung von Luft mit in einem Behandlungsraum (27) angeordneten Düsen (28) zum Zerstäuben von Wasser in die den Behandlungsraum (27) durchströmende Luft und mit einem Flüssigkeitskreislauf (29, 30) zum Zurückführen von zumindest einem Teil des von der Luft nicht aufgenommenen Wassers zu den Düsen (28), **dadurch gekennzeichnet, daß** der Flüssigkeitskreislauf (29, 30) ein Rohrleitungssystem (6) aufweist, daß eine Heizeinrichtung (5) zum Aufheizen des Wassers und/oder eine Kühleinrichtung (6) zum Abkühlen des Wassers im Rohrleitungssystem (29) des Flüssigkeitskreislaufs (29, 30) angeordnet ist, und daß am Ausgang des Behandlungsraumes (27) ein Temperatur- und Feuchtefühler (15) angeordnet ist.

2. Einrichtung nach Anspruch 1, **dadurch gekennzeichnet, daß** der Flüssigkeitskreislauf (29, 30) eine am Boden des Behandlungsraumes angeordnete Auffangvorrichtung, vorzugsweise Auffangwanne (30) für das Wasser aufweist, von der aus Wasser über ein mit einer Pumpe (7) versehenes Rohrleitungssystem (6) den Düsen (28) zuführbar ist.

3. Einrichtung nach Anspruch 2, **dadurch gekennzeichnet, daß** die Heizeinrichtung (5) und/oder die Kühleinrichtung in bzw. an der Auffangvorrichtung, vorzugsweise Auffangwanne (30), angeordnet ist.

4. Einrichtung nach einem der Ansprüche 1 bis 3, **dadurch gekennzeichnet, daß** die Heizeinrichtung (5) und/oder die Kühleinrichtung (6) als Wärmetauscher ausgebildet ist, der einerseits vom im Kreislauf geführten Wasser, andererseits von einem gesonderten flüssigen oder gasförmigen Heizmedium und/oder Kühlmedium durchströmt ist.

5. Einrichtung nach einem der Ansprüche 1 bis 4, **dadurch gekennzeichnet, daß** eine Vielzahl von Düsen (28) über die Querschnittsfläche oder Luftströmung verteilt angeordnet ist.

6. Einrichtung nach einem der Ansprüche 1 bis 5, **dadurch gekennzeichnet, daß** die Hauptsprüheinrichtung der Düsen (28) der Luftströmungsrichtung (25, 26) entgegengesetzt ist.

7. Einrichtung nach einem der Ansprüche 1 bis 6, **dadurch gekennzeichnet, daß** der Behandlungsraum (27) lufteintrittseitig Filter (1) aufweist, die vorzugsweise über im wesentlichen die gesamte durchströmende Querschnittsfläche des Behandlungsraumes (27) verteilt angeordnet sind.

8. Einrichtung nach einem der Ansprüche 1 bis 7, **dadurch gekennzeichnet, daß** der Behandlungsraum (27) luftaustrittseitig einem Tropfenabscheider (3) und gegebenenfalls eine diesem nachgeschaltene Nachheizeinrichtung (4) aufweist.

9. Einrichtung nach Anspruch 8, **dadurch gekennzeichnet, daß** die Nachheizeinrichtung (4) im Wärmetauscher ist.

10. Einrichtung nach den Ansprüchen 1 bis 9, **gekennzeichnet durch** mindestens einen Ventilator (16) zum Hervorrufen der Luftströmung.

11. Einrichtung nach einem der Ansprüche 1 bis 10, **gekennzeichnet durch** eine in den Flüssigkeitskreislauf (29, 30), vorzugsweise in dessen Auffangbecken (30), mündende Frischwasserzufuhr.

12. Einrichtung nach einem der Ansprüche 1 bis 11, **dadurch gekennzeichnet, daß** die Heizleistung der Heizeinrichtung (5, 8, 11) und/oder die Kühlleistung der Kühleinrichtung (6, 10) sowie die pro Zeiteinheit durch die Düsen (28) geförderte Wassermenge einstellbar ist.

13. Einrichtung nach Anspruch 12, **dadurch gekennzeichnet, daß** eine elektronische Regeleinrichtung (13) vorgesehen ist, die die Heizleistung der Heizeinrichtung (5, 8, 11) und/oder die Kühlleistung der Kühleinrichtung (6, 10) sowie die pro Zeiteinheit durch die Düsen (28) geförderte Wassermenge in Abhängigkeit von einem im ausgangsseitigen Luftstrom angeordneten Temperatur- und Feuchtefühler (15) regelt.

14. Einrichtung nach einem der Ansprüche 1 bis 13, **gekennzeichnet durch** einen neben dem Behandlungsraum (27) angebauten von außen zugänglichen Anlagenschrank (34) zur Unterbringung von Anlagenkomponenten wie Pumpen (7, 8, 9), Ventilen (10, 11, 12, 18), der elektronischen Regeleinrichtung (13) und Wärmetauschern (6).

15. Einrichtung nach einem der Ansprüche 1 bis 14, **dadurch gekennzeichnet, daß** die durchströmende Luft - gegebenenfalls bis auf eine den Düsen (28) in Luftströmrichtung unmittelbar nachgeschaltete Nachheizeinrichtung (4) - ausschließlich durch das aus den Düsen (28) ausströmende Wasser ohne weitere Luftheizeinrichtung bzw. Luftkühleinrichtung erwärmt bzw. gekühlt wird.

## Claims

1. Apparatus for the conditioning of air with nozzles (28), arranged in a treatment space (27), for the atomizing of water into the air flowing through the treatment space (27) and with a liquid cycle (29, 30) for returning at least part of the water not taken up by the air to the nozzles (28), **characterized in that** the liquid cycle (29, 30) has a pipe system (6), a heating apparatus (5) for heating the water and/or a cooling apparatus (6) for cooling the water is arranged in the pipe system (29) of the liquid cycle (29, 30), and a temperature and humidity sensor (15) is arranged at the outlet of the treatment space (27).

2. Apparatus according to claim 1, **characterized in that** the liquid cycle (29, 30) has, arranged at the bottom of the treatment space, a collecting device, preferably a collecting pan (30) for the water, from which water can be fed to the nozzles (28) via a pipe system (6) provided with a pump (7).

3. Apparatus according to claim 2, **characterized in that** the heating apparatus (5) and/or the cooling apparatus is arranged in or against the collecting device, preferably collecting pan (30).

4. Apparatus according to one of claims 1 to 3, **characterized in that** the heating apparatus (5) and/or the cooling apparatus (6) is developed as a heat exchanger, through which there flows on the one hand cycled water and on the other hand a separate liquid or gaseous heating medium and/or cooling medium.

5. Apparatus according to one of claims 1 to 4, **characterized in that** a large number of nozzles (28) is arranged distributed over the cross-sectional area or air flow.

6. Apparatus according to one of claims 1 to 5, **characterized in that** the main spraying apparatus of the nozzles (28) is opposed to the direction of air flow (25, 26).

7. Apparatus according to one of claims 1 to 6, **characterized in that** on the air-entry side the treatment space (27) has filters (1) which are preferably arranged distributed over essentially the entire through-flowing cross-sectional area of the treatment space (27).

8. Apparatus according to one of claims 1 to 7, **characterized in that** on the air-exit side the treatment space (27) has a mist eliminator (3) and optionally an after-heating apparatus (4) downstream of this.

9. Apparatus according to claim 8, **characterized in that** the after-heating apparatus (4) is in the heat exchanger.

10. Apparatus according to claims 1 to 9, **characterized by** at least one fan (16) to bring about the air flow.

11. Apparatus according to one of claims 1 to 10, **characterized by** a fresh-water feed discharging into the liquid cycle (29, 30), preferably into its collecting basin (30).

12. Apparatus according to one of claims 1 to 11, **characterized in that** the heating capacity of the heating apparatus (5, 8, 11) and/or the cooling capacity of the cooling apparatus (6, 10) as well as the water quantity transported through the nozzles (28) per unit of time is adjustable.

13. Apparatus according to claim 12, **characterized in that** an electronic regulating apparatus (13) is provided which regulates the heating capacity of the heating apparatus (5, 8, 11) and/or the cooling capacity of the cooling apparatus (6, 10) as well as the water quantity transported through the nozzles (28) per unit of time, depending on a temperature and humidity sensor (15) arranged in the exit-side air flow.

14. Apparatus according to one of claims 1 to 13, **characterized by** an equipment cabinet (34) for the housing of equipment components such as pumps (7, 8, 9), valves (10, 11, 12, 18), the electronic regulating apparatus (13) and heat exchangers (6).

15. Apparatus according to one of claims 1 to 14, **characterized in that** the air flowing through - optionally up to an after-heating apparatus (4) arranged directly downstream of the nozzles (28) in the direction of air flow - is heated or cooled exclusively by the water flowing out of the nozzles (28) without an additional air-heating or air-cooling apparatus.

## Revendications

1. Dispositif de préparation de l'air comportant des buses (28) disposées dans une enceinte de traitement (27), les buses servant à pulvériser de l'eau dans l'air dont l'écoulement traverse l'enceinte de traitement (27), et avec un circuit à liquide (29, 30) pour recycler au moins une partie de l'eau non captée par l'air vers les buses (28), **caractérisé en ce que** le circuit à liquide (29, 30) présente un système de tuyauterie (6), **en ce qu'**un système de chauffage (5), devant chauffer l'eau et/ou un dispositif de refroidissement (6) devant refroidir l'eau est disposé dans le système de tuyauterie (29) du circuit à liquide (29, 30), et **en ce qu'**une sonde de température et d'humidité (15) est disposée à la sortie de l'enceinte de traitement (27).

2. Dispositif selon la revendication 1, **caractérisé en ce que** le circuit à liquide (29, 30) présente un dispositif de captage, de préférence un bac de captage (30) pour l'eau, disposé au fond de l'enceinte de traitement, d'où l'eau peut être amenée aux buses (28) par l'intermédiaire d'un système de tuyauterie (6), muni d'une pompe (7).

3. Dispositif selon la revendication 2, **caractérisé en ce que** le dispositif de chauffage (5) et/ou le dispositif de refroidissement, est disposé dans ou sur le dispositif de captage, de préférence le bac de captage (30) .

4. Dispositif selon l'une des revendications 1 à 3, **caractérisé en ce que** le dispositif de chauffage (5) et/ou le dispositif de refroidissement (6) est réalisé sous forme d'échangeur de chaleur, traversé, d'une part, par l'écoulement de l'eau guidée en circuit, d'autre part, par un fluide de chauffage et/ou un fluide de refroidissement, liquide ou gazeux, séparé.

5. Dispositif selon l'une des revendications 1 à 4, **caractérisé en ce qu'**une pluralité de buses (28) est disposée de façon répartie sur l'aire de section transversale ou dans l'écoulement d'air.

6. Dispositif selon l'une des revendications 1 à 5, **caractérisé en ce que** le dispositif de pulvérisation principal des buses (28) est orienté à l'encontre de la direction d'écoulement d'air (25, 26).

7. Dispositif selon l'une des revendications 1 à 6, **caractérisé en ce que** l'enceinte de traitement (27) présente, côté entrée d'air, des filtres (1) disposés de préférence répartis sur pratiquement la totalité de l'aire de section transversale, parcourue par l'écoulement, de l'enceinte de traitement (27).

8. Dispositif selon l'une des revendications 1 à 7, caractérisé en ce l'enceinte de traitement (27) présente, côté sortie de l'air, un séparateur à gouttes (3) et, le cas échéant, un dispositif de réchauffage (4), installé en aval de celui-ci.

9. Dispositif selon la revendication 8, **caractérisé en ce que** le dispositif de réchauffage (4) est monté dans l'échangeur de chaleur.

10. Dispositif selon les revendications 1 à 9, **caractérisé par** au moins un ventilateur (16) pour provoquer l'écoulement d'air.

11. Dispositif selon l'une des revendications 1 à 10, **caractérisé par** une amenée d'eau fraîche débouchant dans le circuit à liquide (29,30), de préférence dans son bac de captage (30).

12. Dispositif selon l'une des revendications 1 à 11, **caractérisé en ce que** la puissance de chauffage du dispositif de chauffage (5, 8, 11) et/ou la puissance de refroidissement du dispositif de refroidissement (6,10), ainsi que la quantité d'eau véhiculée par unité de temps par les buses (28), sont réglables.

13. Dispositif selon la revendication 12, **caractérisé en ce qu'**est prévu un dispositif de régulation (13) électronique, qui règle la puissance de chauffage du dispositif de chauffage (5, 8, 11), et/ou la puissance de refroidissement du dispositif de refroidissement (6, 10), ainsi que la quantité d'eau véhiculée par unité de temps par les buses (28), en fonction du signal d'une sonde de température et d'humidité (15), disposée dans l'écoulement d'air, côté sortie.

14. Dispositif selon l'une des revendications 1 à 13, **caractérisé par** une armoire d'installation (34), montée à côté de l'enceinte de traitement (27), accessible de l'extérieur, devant loger des composants d'installation, tels que des pompes (7, 8, 9), des soupapes (10, 11, 12, 18), le dispositif de régulation (13) électronique et les échangeurs de chaleur (6).

15. Dispositif selon l'une des revendications 1 à 14, **caractérisé en ce que** l'air mis en écoulement - le cas échéant jusqu'à un dispositif de réchauffage (4), installé directement en aval des buses (28) dans la direction d'écoulement de l'air - est chauffé ou refroidi, exclusivement par l'eau sortant des buses (28), sans utiliser d'autre dispositif de chauffage d'air ou de refroidissement d'air.
